Europäisches Patentamt

European Patent Office

Office européen des brevets

(19)

(11) Publication number: **0 389 462**

**A1**

(12) # EUROPEAN PATENT APPLICATION

(21) Application number: **90850108.3**

(22) Date of filing: **20.03.90**

(51) Int. Cl.5: **F16L 21/02**

(30) Priority: **21.03.89 FI 891341**

(43) Date of publication of application:
**26.09.90 Bulletin 90/39**

(84) Designated Contracting States:
**AT BE CH DE DK ES FR GB GR IT LI LU NL SE**

(71) Applicant: **PAAVO RANNILA OY**
**Kalkkimäentie 1**
**SF-62800 Vimpeli(FI)**

(72) Inventor: **Pelander, Markku**

**SF-62800 Vimpeli(FI)**
Inventor: **Rannila, Kari**

**SF-62800 Vimpeli(FI)**

(74) Representative: **Örtenblad, Bertil Tore**
**Noréns Patentbyra AB Box 27034**
**S-102 51 Stockholm(SE)**

(54) Pipe joint for air conditioners.

(57) A pipe joint for air conditioners, whose joint portion (1) is equipped with an annular recess (2), from where a perpendicular or inclined surface portion (3) rises to the surface of the joint portion and to the recess a flexible sealing ring (4) is fixed, whose sealing flange in the unloaded state extends approximately perpendicularly from the joint portion, and in the loaded state, when the pipe element (5) is pushed on top of the joint portion, bends against the surface portion (3). The radial length of the sealing flange (4) is essentially longer than the length of the surface portion so that its end gets between the outer surface of the joint portion and the inner surface of the pipe element (5).

EP 0 389 462 A1

Fig.2

## Pipe joint for air conditioners

This invention relates to a pipe joint for air conditioners comprising an annular recess, from which a perpendicular or tilted surface portion rises to the surface of the joint, a flexible sealing ring having been fixed to the recess, and the sealing flange of this ring extends in the unloaded state approximately perpendicularly from the joint, and in the loaded state, the pipe element having been pushed on top of the joint, is bent towards the surface portion.

Pipe joints of this kind are disclosed e.g. by the US patent specification 1 819 007, the SE patent specification 360 451 and the SE patent specification 337 146. Practice has revealed that thin-walled pipes do not always maintain the shape that was produced at the factory. On construction sites pipes are being roughly handled; they are thrown about and frequently are submitted to pressure before being put to use in air conditioner installations. Since the cross-section of the pipes is no longer circular, but the pipe has been damaged and the cross-section has become oval, leakages easily arise at the joints. The greater the diameter of the jointed pipes, the greater the risk of leakage. These leakages are not perceptible at once during installation.

The purpose of the invention is to eliminate the above inconvenients. The pipe joint according to the invention is characterized by that the radial length of the sealing flange is essentially longer than the length of the surface portion, and that its end gets between the outer surface of the joint and the pipe element. By means of the invention, a sealing pipe joint is obtained although the cross-section of the pipe element would not be perfectly circular. The radial length of the sealing flange is noticeably longer than that of known sealing flanges, thus naturally allowing greater tolerances at the joints.

The joint is retained in position remarkably better than in known solutions, since the pipe element, when installed on top, will be supported by the sealing flange, providing a far better friction than when posing metal sheets against each other.

One embodiment of the invention is characterized by that the radial length of the sealing flange is approx. one and a half times the length of the surface portion. Thus, about one third of the length of the sealing flange will get between the joint and the pipe element.

The invention is described below by means of an example and referring to the enclosed drawing, in which

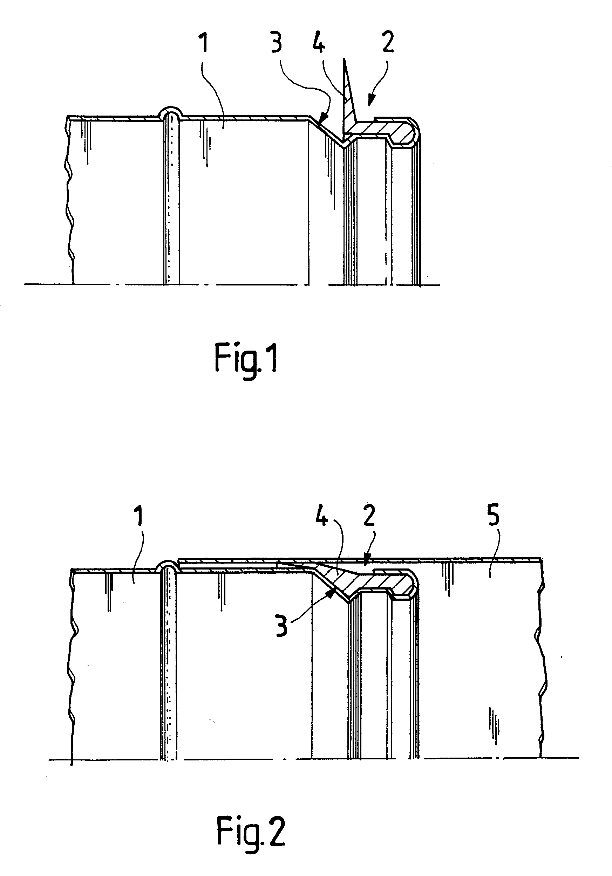

figure 1 shows the joint before the installation of the pipe element.

figure 2 shows the joint equipped with the pipe element.

The joint is intended for air conditioners. In the joint portion 1 of the pipe joint an annular recess 2 is provided, from where an inclined surface portion 3 rises to the surface of the joint portion. To the recess 2 a flexible sealing ring 4 is attached, whose sealing flange in the unloaded state extends approximately perpendicularly from the joint portion, and in the loaded state, when the pipe element 5 is pushed on top of the joint portion, bends against the inclined surface portion 3. The radial length of the sealing flange 4 is essentially longer than the length of the inclined surface portion 3 so that its end gets between the outer surface of the joint portion 1 and the inner surface of the pipe element 5. The radial length of the sealing flange 4 is about one and a half times the length of the inclined surface 3. Especially in large pipes having a diameter in the range of 350-400 mm, the pipe joint of the invention provides reliable and tight joints.

## Claims

1. A pipe joint for air conditioners, whose joint portion (1) is equipped with an annular recess (2), from where a perpendicular or inclined surface portion (3) rises to the surface of the joint portion, and to the recess a flexible sealing ring (4) is fixed, whose sealing flange in the unloaded state extends approximately perpendicularly from the joint portion, and in the loaded state, when the pipe element (5) is pushed on top of the joint portion, bends against the surface portion (3), **characterized** in that the radial length of the sealing flange (4) is essentially longer than the length of the surface portion (3) so that its end gets between the outer suface of the joint portion and the inner portion of the pipe element (5).

2. A pipe joint according to claim 1, **characterized** in that the radial length of the sealing flange (4) is about one and half times the length of the surface portion (3).

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-3955834 (AHLROT)<br>* figures *<br>& SE-A-360451<br>--- | 1 | F16L21/02 |
| A | CH-A-599493 (AB SVENSKA FLÄKTFABRIKEN)<br>* figures *<br>--- | 1 | |
| A | AT-B-357828 (GEBRÜDER SULZER AG)<br>* figures *<br>--- | 1 | |
| A | DE-A-3141114 (GEBRÜDER SULZER AG)<br>* figures *<br>----- | 1 | |
| | | | TECHNICAL FIELDS SEARCHED (Int. Cl.5 ) |
| | | | F16L<br>F24F |

The present search report has been drawn up for all claims

| Place of search | Date of completion of the search | Examiner |
|---|---|---|
| THE HAGUE | 09 JULY 1990 | BARTSCH A.W. |

EPO FORM 1503 03.82 (P0401)